Europäisches Patentamt

European Patent Office

Office européen des brevets

(11) Numéro de publication: **0 230 686 B1**

## FASCICULE DE BREVET EUROPEEN

(45) Date de publication de fascicule du brevet:
**27.02.91**

(51) Int. Cl.5: **C01D 7/16, C01D 3/06**

(21) Numéro de dépôt: **86201977.5**

(22) Date de dépôt: **12.11.86**

(54) Procédé pour la préparation d'une solution aqueuse de chlorure de sodium et procédé pour la production de bicarbonate de sodium.

(30) Priorité: **25.11.85 FR 8517494**

(43) Date de publication de la demande:
**05.08.87 Bulletin 87/32**

(45) Mention de la délivrance du brevet:
**27.02.91 Bulletin 91/09**

(84) Etats contractants désignés:
**AT BE CH DE ES FR GB GR IT LI LU NL SE**

(56) Documents cités:
**GB-A- 2 146 011**

(73) Titulaire: **SOLVAY & Cie (Société Anonyme)**
**Rue du Prince Albert, 33**
**B-1050 Bruxelles(BE)**

(72) Inventeur: **Ninane, Léon**
**Rue Laennec, 1**
**F-54110 Dombasle-sur-Meurthe(FR)**
Inventeur: **Breton, Claude**
**Rue Pierre Breton, 5**
**F-54110 Dombasle-sur-Meurthe(FR)**

(74) Mandataire: **Anthoine, Paul et al**
**SOLVAY & Cie Département de la Propriété**
**Industrielle 310, rue de Ransbeek**
**B-1120 Bruxelles(BE)**

## Description

L'invention concerne un procédé pour la préparation d'une solution aqueuse de chlorure de sodium à partir d'un solution aqueuse contenant du bicarbonate de sodium dissous.

On connaît une technique pour la fabrication de bicarbonate de sodium, selon laquelle on mélange une solution aqueuse de chlorure de sodium et une phase organique comprenant une amine insoluble dans l'eau, on traite le mélange résultant avec un gaz contenant de l'anhydride carbonique, puis le soumet à une décantation pour séparer une suspension aqueuse de bicarbonate de sodium et une phase organique comprenant du chlorhydrate d'amine, et on traite la suspension aqueuse pour séparer le bicarbonate de sodium solide qu'elle contient et une eau mère et on régénère l'amine de la phase organique de chlorhydrate d'amine (brevet GB-S-1082436 (KAISER ALUMINIUM & CHEMICAL CORPORATION), page 2, ligne 105 à page 3, ligne 5; Central Patents Index, Basic Abstracts Journal, Section E, Week T.49; Derwent Publication Ltd., Londres, abrégé 78430T-E : demande de brevet JP-A-7241237 (ISRAEL MINING IND. INST. RES & DEV.)).

Dans la suite de la description, l'expression "technique aux amines" désignera cette technique connue de fabrication de bicarbonate de sodium.

Dans la technique aux amines, on ajoute habituellement du chlorure de sodium à l'eau mère de la cristallisation du bicarbonate de sodium, pour reconstituer la solution aqueuse de chlorure de sodium de départ.

Cette pratique permet de récupérer la totalité du sodium et des ions carbonate et bicarbonate de l'eau mère et assure ainsi un taux maximum d'utilisation du sodium mis en oeuvre. Elle a toutefois imposé, jusqu'à présent, la mise en oeuvre de chlorure de sodium de grande pureté et interdit notamment l'utilisation de sel gemme. En effet, la présence d'impuretés dans le sel gemme et, plus spécialement, de sulfate de calcium a pour résultat de précipiter les ions carbonate et bicarbonate de l'eau mère, à l'état de carbonate de calcium et de former du sulfate de sodium qui passe en solution; il s'ensuit, d'une part, une perte en ions carbonate et bicarbonate et, d'autre part, un enrichissement progressif de la solution aqueuse de chlorure de sodium, en sulfate de sodium, ce qui conduit à une diminution de la solubilité du chlorure de sodium et à des réactions parasites avec l'amine, nuisibles à la bonne marche de la technique de fabrication du bicarbonate de sodium.

Dans le document GB-A-2146011, on décrit un procédé qui évite ces inconvénients et qui consiste à traiter une solution aqueuse de bicarbonate de sodium avec du chlorure d'un cation organique (par exemple du chlorhydrate d'amine) de manière à décomposer le bicarbonate de sodium, à évacuer l'anhydride carbonique qui se forme et à ajouter ensuite du sel gemme à la solution aqueuse résultante. Ce procédé implique de soutirer l'anhydride carbonique produit par la décomposition du bicarbonate de sodium.

L'invention vise à fournir un autre procédé qui s'accommode de l'utilisation de sel gemme pour la préparation de solutions aqueuses de chlorure de sodium, à partir de solutions aqueuses contenant du bicarbonate de sodium dissous, et qui n'implique pas de récupérer de l'anhydride carbonique gazeux.

En conséquence l'invention concerne un procédé pour la préparation d'une solution aqueuse de chlorure de sodium, à partir d'une solution aqueuse contenant du bicarbonate de sodium dissous, selon lequel on traite la solution de bicarbonate de sodium avec un liquide organique non miscible avec la solution de bicarbonate de sodium et comprenant une base organique azotée insoluble dans l'eau qui présente un caractère basique suffisant pour réagir avec le chlorure d'hydrogène en formant du chlorhydrate de la base organique azotée, et on ajoute du sel gemme à la phase aqueuse résultante, le liquide organique comprenant éventuellement du chlorhydrate de la base organique azotée, en une quantité pondérale n'excédant pas 25% du poids global de la base organique azotée et du chlorhydrate de la base organique azotée.

Dans le procédé selon l'invention la base organique azotée est, par définition, tout réactif organique azoté insoluble dans l'eau qui présente un caractère basique suffisant pour réagir avec le chlorure d'hydrogène en formant du chlorhydrate de la base. Des exemples de bases organiques azotées utilisables dans le procédé selon l'invention sont les imines insolubles dans l'eau et leurs dérivés, les sels d'ammonium quaternaire et les amines et leurs dérivés insolubles dans l'eau. Dans le procédé on peut utiliser indifféremment des amines primaires, secondaires ou tertiaires. On utilise de manière spécialement avantageuse des amines primaires et, tout particulièrement, des alkylamines primaires comprenant de 12 à 24 atomes de carbone, de préférence de 12 à 14 atomes de carbone, qui trouvent une utilisation intéressante dans la fabrication de bicarbonate de sodium par la technique aux amines décrite plus haut.

Le liquide organique peut être constitué par la base organique telle quelle, dans le cas où celle-ci est liquide. En variante il peut être une solution de la base organique azotée dans un solvant. Le cas échéant le solvant doit être choisi de telle sorte qu'il soit insoluble dans le milieu aqueux.

On entend par l'expression "insoluble dans l'eau", que la solubilité de la base organique azotée et, le cas échéant, du solvant dans l'eau n'éxcède pas 2 % en poids de solution, de préférence 1 %.

On entend par l'expression "non miscible" que le liquide organique ne peut pas se mêler avec la solution aqueuse de bicarbonate de sodium en formant un mélange homogène stable.

Le liquide organique peut éventuellement contenir du chlorhydrate de la base organique azotée. D'une manière générale, il convient toutefois que le rapport entre le poids de chlorhydrate de la base organique azotée dans le liquide organique et le poids total du mélange de base organique azotée et de chlorhydrate n'excède pas 0,25, les rapports inférieurs à 0,20 étant conseillés et ceux inférieurs à 0,15 étant préférés. Dans la suite, ce rapport est appelé "taux de chlorhydrate du liquide organique".

Le traitement de la solution aqueuse de bicarbonate de sodium avec le liquide organique comprenant une base organique azotée peut être opéré dans tout réacteur chimique adéquat dans lequel la solution et le liquide organique sont mis physiquement en contact l'un avec l'autre. Le traitement consiste le plus souvent à mélanger la solution aqueuse de bicarbonate de sodium avec le liquide organique.

Le mélange a pour fonction de provoquer une dispersion efficace, homogène du liquide organique dans la solution aqueuse. Le mélange peut être opéré par tout moyen connu et approprié tel qu'un brassage par un agitateur mécanique, par exemple.

Le traitement, conformément à l'invention, de la solution aqueuse de bicarbonate de sodium avec le liquide organique a pour effet de décomposer le bicarbonate de sodium en formant du carbonate de sodium et de l'anhydride carbonique qui passe en solution dans le liquide organique.

La quantité de liquide organique à mettre en oeuvre et la durée optimum du traitement doivent être suffisantes pour provoquer une conversion substantielle du bicarbonate de sodium en carbonate de sodium; les valeurs optimum dépendent de divers paramètres notamment de la nature de la base organique azotée, de la viscosité du liquide organique et de la concentration en bicarbonate de sodium dans la solution aqueuse. Elles doivent être déterminées dans chaque cas particulier, au moyen d'un travail de routine au laboratoire.

Par exemple, dans le cas de solutions aqueuses diluées comprenant entre 0,5 et 0,8 % en poids de bicarbonate de sodium dissous, on règle la quantité du liquide organique pour qu'à l'issue d'un brassage pendant un temps compris entre 20 et 60 minutes environ, la teneur en bicarbonate de sodium dissous dans la solution aqueuse soit tombée entre 0,2 et 0,4 % en poids.

A l'issue du traitement de la solution aqueuse de bicarbonate de sodium avec le liquide organique, on recueille séparément une phase aqueuse et une phase organique. La séparation des deux phases peut être opérée par tout moyen connu approprié; on utilise de préférence un moyen physique, par exemple une décantation qui peut être opérée par gravité ou par centrifugation.

Le moyen mis en oeuvre pour ajouter le sel gemme à la phase aqueuse n'est pas critique. On peut par exemple, à cet effet, utiliser un dissolveur à fonctionnement continu, alimenté de manière réglée par du sel gemme solide et par ladite phase aqueuse. Des exemples de dissolveurs utilisables dans la mise en oeuvre du procédé selon l'invention sont décrits dans le brevet FR-A-2471350 (SOLVAY & Cie).

Selon une forme de réalisation spécialement avantageuse du procédé selon l'invention, pour ajouter le sel gemme à la phase aqueuse, on fait percoler celle-ci à travers un gisement souterrain du sel gemme; à cet effet, on enfonce deux canalisations dans le gisement de sel gemme, au voisinage l'une de l'autre (habituellement une canalisation tubulaire et une canalisation annulaire coaxiales), on injecte la phase aqueuse sous pression dans l'une des canalisations et on soutire une solution aqueuse de chlorure de sodium par l'autre canalisation (Dale W. KAUFMANN "Sodium Chloride", American Chemical Society Monograph Series, 1960, Reinhold Publishing Corporation, Chapman & Hall, Ltd., London, pages 142 à 185).

Le procédé selon l'invention s'applique, d'une manière générale, à toutes les solutions de bicarbonate de sodium, notamment aux eaux mères de la cristallisation de bicarbonate de sodium, réalisée par carbonatation de solutions aqueuses d'hydroxyde de sodium ou par la technique aux amines décrite plus haut. Il s'applique spécialement bien aux solutions aqueuses diluées, notamment à celles dont la teneur pondérale en bicarbonate de sodium n'excède pas 2 % et est de préférence inférieure à 1,5 %, par exemple comprise entre 0,4 et 1 %. A cet effet, dans une forme d'exécution avantageuse du procédé selon l'invention on met en oeuvre une solution aqueuse diluée de bicarbonate de sodium obtenue par traitement d'une solution aqueuse saturée de bicarbonate de sodium avec un chlorhydrate de la base organique azotée comme décrit dans le document FR-A-2551428 (SOLVAY & Cie).

Dans une variante particulière de cette forme d'exécution du procédé selon l'invention, on sélectionne une base organique azotée dont le chlorhydrate est soluble dans la solution aqueuse diluée de bicarbonate de sodium et, avant d'ajouter le sel gemme à la phase aqueuse, on traite celle-ci avec un agent basique capable de décomposer le chlorhydrate. Dans cette variante de l'invention, la base organique dont le chlorhydrate est soluble dans la solution aqueuse diluée peut être par exemple de la triéthylamine ou une alkylamine primaire contenant moins de 18 atomes de carbone dans sa molécule, par exemple entre 12 et 14 atomes de carbone, telle que celle connue sous la marque PRIMENE 81R (Rohm & Haas). L'agent basique a pour fonction de décomposer le chlorhydrate pour former la base organique azotée. On choisit avantageusement de l'oxyde ou de l'hydroxyde de sodium, de préférence en solution aqueuse.

La quantité d'agent basique à mettre en oeuvre dans le procédé selon l'invention est inférieure à celle des procédés de l'art antérieur.

Le mélange réactionnel recueilli à l'issue du traitement avec l'agent basique est généralement une émulsion de deux phases immiscibles dont l'une est une phase organique comprenant la base organique azotée et l'autre est une phase aqueuse à laquelle on ajoute ensuite le sel gemme. Pour séparer ces deux phases l'une de l'autre on peut par exemple faire usage d'une décantation par gravité ou par centrifugation ou utiliser un filtre à coalescence, comme décrit dans "Chemical Engineers' Handbook -John H. Perry - 4th edition -Mc Graw - Hill Book Company - 1963 - page 21-19".

Les solutions aqueuses de chlorure de sodium obtenues par le procédé selon l'invention sont utilisables dans toute industrie nécessitant la mise en oeuvre de solutions aqueuses concentrées, généralement saturées, de chlorure de sodium, et tout spécialement dans la technique de fabrication de la soude à l'ammoniaque, dans la technique aux amines définie plus haut et dans les techniques d'électrolyse pour la production de chlore et de solutions aqueuses d'hydroxyde de sodium.

Le procédé selon l'invention trouve une application intéressante dans la technique aux amines définie plus haut, pour y régénérer simultanément la solution aqueuse de chlorure de sodium et l'amine.

L'invention concerne dès lors aussi un procédé pour la fabrication de bicarbonate de sodium, selon lequel on traite une solution aqueuse de chlorure, de sodium de l'anhydride carbonique et une base organique azotée insoluble dans l'eau, on recueille, du mélange réactionnel résultant, du bicarbonate de sodium solide, une eau mère et du chlorhydrate de la base organique azotée et on décompose le chlorhydrate pour reconstituer la base organique azotée; selon l'invention on mélange l'eau mère avec la base organique azotée reconstituée, on recueille une phase aqueuse et une phase organique qui décantent du mélange résultant, on recycle la phase organique dans le mélange réactionnel, et on ajoute du sel gemme à la phase aqueuse que l'on recycle dans le milieu réactionnel.

Divers modes opératoires peuvent être mis en oeuvre pour traiter la solution aqueuse de chlorure de sodium avec la base organique azotée et l'anhydride carbonique. Par exemple, selon un premier mode opératoire, on mélange d'abord la solution aqueuse et la base organique azotée, et on traite ensuite le mélange avec l'anhydride carbonique. En variante, on peut aussi utiliser le mode opératoire décrit aux exemples 4 et 5 du brevet IL-A-33551, selon lequel on traite d'abord la base organique azotée avec l'anhydride carbonique pour le bicarbonater et on mélange ensuite la base organique bicarbonatée à la solution aqueuse de chlorure de sodium.

Pour isoler le chlorhydrate de la base organique azotée du mélange réactionnel, il suffit généralement de soumettre celui-ci à une décantation par gravité, ou à une centrifugation, ou à une combinaison de ces deux modes de séparation de phases. En variante, avant d'isoler le chlorhydrate de la base organique azotée du mélange réactionnel, on peut d'abord recueillir le bicarbonate de métal alcalin solide qu'il contient, en le soumettant par exemple à une filtration, une sédimentation ou une centrifugation.

La décomposition du chlorhydrate peut être réalisée de manière connue en soi, au moyen d'un composé basique de métal alcalino-terreux, tel que de l'oxyde, de l'hydroxyde ou du carbonate de métal alcalino-terreux. Dans le cas où la base organique azotée est une amine, notamment une alkylamine primaire, on utilise de préférence du carbonate de calcium, du carbonate de magnésium ou un mélange des deux tel que la dolomie; le calcaire broyé convient spécialement bien.

Selon une forme de réalisation avantageuse du procédé selon l'invention, la décomposition du chlorhydrate est opérée en deux étapes. Dans une première étape, le chlorhydrate est traité avec l'eau mère, comme décrit dans le document FR-A-2551428 (SOLVAY & Cie), de manière à décomposer une quantité substantielle du bicarbonate de sodium de l'eau mère et une quantité substantielle du chlorhydrate pour restituer la base organique azotée; dans une seconde étape, le chlorhydrate qui n'a pas été décomposé à la première étape est décomposé au moyen d'un composé basique de métal alcalino-terreux comme exposé ci-dessus.

Dans le procédé selon l'invention, la base organique azotée reconstituée contient généralement du métal alcalino-terreux dissous, lorsque la décomposition du chlorhydrate a été réalisée au moyen d'un composé basique de métal alcalino-terreux. Le cas échéant, le mélange de la base organique azotée reconstituée avec l'eau mère a pour effet de faire passer le métal alcalino-terreux dans la phase aqueuse. A cet effet, selon l'invention, il est souhaitable de soumettre la phase aqueuse à une épuration en calcium avant ou, de préférence, après l'addition du sel gemme. L'épuration en calcium peut être opérée de toute manière connue en soi pour l'épuration des saumures, par exemple par traitement avec du carbonate de baryum ou de sodium ("Chlorine, Its manufacture, properties and uses." Sconce - Reinhold Publishing Corp. - 1962 - page 135).

L'invention s'applique tout particulièrement à la production du bicarbonate de sodium par la technique aux amines, dans laquelle on sélectionne l'amine parmi celles dont le chlorhydrate est soluble dans l'eau, telles que les alkylamines primaires contenant moins de 18 atomes de carbone dans leur molécule; elle s'applique spécialement bien à l'utilisation de telles alkylamines primaires contenant entre 12 et 14 atomes de carbone, telles que celle connue sous la marque PRIMENE 81R (Rohm & Haas).

Des particularités et détails de l'invention ressortiront de la description suivante des dessins annexés, qui représentent le schéma générale d'une installation pour la production de bicarbonate de sodium mettant en oeuvre deux formes d'exécution particulières du procédé selon l'invention.

Dans ces figures de mêmes notations de référence désignent des éléments identiques.

La figure 1 est un schéma d'une installation pour la fabrication de bicarbonate de sodium par la technique aux amines, mettant en oeuvre une première forme de réalisation du procédé selon l'invention.

La figure 2 montre une autre forme de réalisation préférée du procédé selon l'invention.

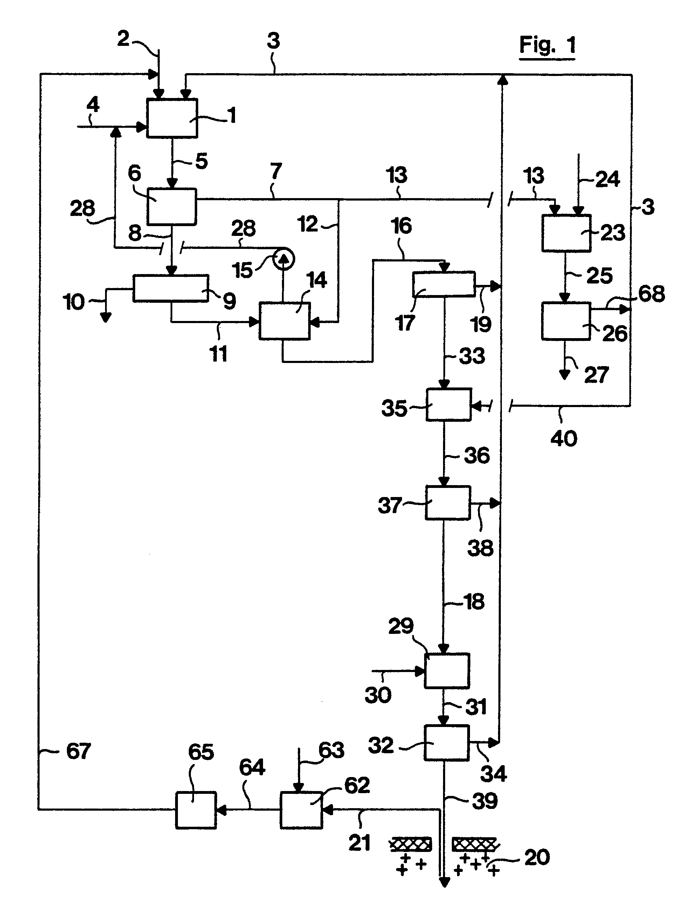

L'installation représentée à la figure 1 comprend une chambre de cristallisation 1 qui est alimentée, de manière continue, avec une solution aqueuse sensiblement saturée de chlorure de sodium 2, un liquide organique d'amine 3 insoluble dans la solution aqueuse de chlorure de sodium et un gaz contenant de l'anhydride carbonique 4. Le liquide organique d'amine peut par exemple être une solution à 50 % en poids de l'amine dans le xylène. L'amine sélectionnée est une alkylamine primaire comprenant entre 12 et 14 atomes de carbone dans sa molécule (par exemple l'amine PRIMENE 81R® (Rohm & Haas)) dont le chlorhydrate est soluble dans l'eau et les solutions aqueuses. Le gaz 4 est de préférence un gaz enrichi, contenant 60 à 80 % en poids d'anhydride carbonique, obtenu par exemple en mélangeant en proportions adéquates un gaz de four à chaux avec un gaz résiduaire de la calcination du bicarbonate de sodium en monocarbonate de sodium. La quantité de gaz mise en oeuvre doit être suffisante pour convertir une partie substantielle du chlorure de sodium de la solution 2 en bicarbonate de sodium. En variante, on peut faire précéder le traitement dans la chambre de cristallisation 1 par une carbonatation partielle du mélange au moyen d'un gaz pauvre en anhydride carbonique, tel qu'un gaz de four à chaux.

On soutire de la chambre de cristallisation 1, un liquide 5 constitué d'un mélange de solution aqueuse et de liquide organique et contenant des cristaux de bicarbonate de sodium en suspension. Ce liquide 5 est transféré dans une chambre de décantation 6, où on sépare, par gravité, une solution organique de chlohydrate d'amine 7 et un brouet aqueux 8 de cristaux de bicarbonate de sodium. Ce dernier est envoyé dans un dispositif d'essorage ou de filtration 9, où on recueille séparément du bicarbonate de sodium solide 10 et une eau mère 11. Celle-ci est saturée en bicarbonate de sodium et contient du chlorhydrate d'amine dissous.

On scinde la solution organique de chlorhydrate d'amine 7 en deux fractions 12 et 13.

La fraction 13 est ensuite traitée de manière connue en soi dans la technique aux amines, pour régénérer l'amine. A cet effet, elle est envoyée dans une chambre de réaction 23, où on la soumet à un brassage avec une suspension aqueuse d'hydroxyde de calcium 24, et le mélange réactionnel résultant 25 est envoyé dans une chambre de décantation 26 de laquelle on recueille séparément une solution aqueuse de chlorure de calcium 27 et un liquide organique d'amine 68.

On introduit la fraction 12 et l'eau mère 11 dans une chambre de réaction 14 et les y soumet à un brassage énergique pour engendrer une réaction entre le bicarbonate de sodium et le chlorhydrate d'amine, conduisant à la formation de chlorure de sodium qui passe en solution aqueuse, d'amine qui passe en solution organique et d'anhydride carbonique. Pour promouvoir la réaction entre le bicarbonate de sodium et le chlorhydrate d'amine, on chauffe la chambre de réaction 14, par exemple à une température de l'ordre de 60° C, et on en évacue l'anhydride carbonique qui s'y forme, au moyen d'une pompe à vide 15. L'anhydride carbonique 28 soutiré de la chambre de réaction 14 par la pompe 15 est avantageusement refoulé dans la chambre de cristallisation 1.

On soutire hors de la chambre de réaction 14 un liquide 16 formé d'un mélange d'une solution aqueuse diluée de chlorure de sodium et d'un liquide organique d'amine; on envoie le liquide 16 dans une chambre de décantation 17 de laquelle on recueille séparément la solution aqueuse diluée de chlorure de sodium 33 et le liquide organique d'amine 19.

La solution aqueuse 33 contient encore du bicarbonate de sodium et du chlorhydrate d'amine dissous. Elle est transférée dans une chambre de réaction 35 qui est alimentée avec un liquide organique d'amine 40 en une quantité suffisante pour décomposer le bicarbonate de sodium et récupérer le chlorhydrate d'amine. Le mélange résultant 36 est soutiré de la chambre de réaction 35 et est envoyé dans une chambre de décantation 37, de laquelle on recueille séparément une phase aqueuse diluée de chlorure de sodium 18 et un liquide organique d'amine 38.

La phase aqueuse diluée de chlorure de sodium 18 contient encore une petite fraction de chlorhydrate d'amine dissous, qu'il est utile de récupérer. A cet effet, elle est transférée dans une chambre de réaction 29 qui est alimentée avec une solution aqueuse d'hydroxyde de sodium 30, en quantité suffisante pour décomposer le chlorhydrate d'amine. La solution aqueuse 30 peut avantageusement consister en une solution aqueuse contenant entre 30 et 60 % en poids d'hydroxyde de sodium, obtenue par électrolyse d'une solution aqueuse de chlorure de sodium dans une cellule d'électrolyse à mercure ou à membrane à perméabilité sélective. En variante, elle peut aussi être une solution aqueuse contenant entre 10 et 20 % en poids d'hydroxyde de sodium et entre 10 et 20 % en poids de chlorure de sodium, obtenue par électrolyse d'une solution aqueuse de chlorure de sodium dans une cellule à diaphragme.

Le liquide 31 soutiré de la chambre de réaction 29 présente l'aspect d'une émulsion. Il est envoyé sur un filtre à coalescence 32, conçu de manière connue en soi pour briser l'émulsion et séparer la phase organique 34 et la phase aqueuse 39.

La phase aqueuse 39 est une solution diluée de chlorure de sodium 39; elle est introduite dans un gisement de sel gemme 20, duquel on soutire un débit équivalent d'une solution aqueuse saturée de chlorure de sodium 21. Celle-ci est envoyée dans une installation d'épuration 62, où elle est notamment traitée avec du carbonate de sodium 63 en quantité suffisante pour précipiter le calcium qui s'y trouve dissous.

Le liquide 64 soutiré de la chambre de réaction 62 est envoyé dans une chambre de décantation ou de filtration 65, de laquelle on recueille une solution aqueuse saturée de chlorure de sodium 67, que l'on envoie dans la chambre de cristallisation 1.

Les liquides organiques d'amine 19, 34, 38 et 68 recueillis de chambres 17, 32, 37 et 26, sont réunis pour reconstituer le liquide organique d'amine 3 de départ et le liquide organique 40 utilisé dans la chambre 35.

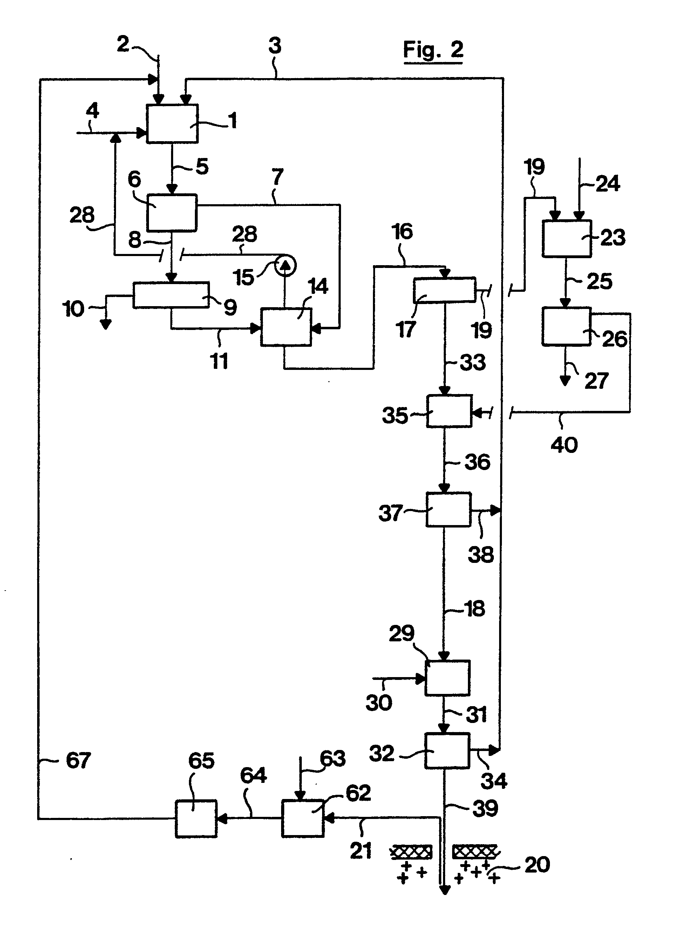

Dans une forme d'exécution modifiée du procédé schématisé à la figure 2 la solution organique de chlorhydrate d'amine 7 est introduite en totalité dans la chambre de réaction 14, de sorte que le liquide organique 19 recueilli de la chambre de décantation 17 contient une fraction importante de chlorhydrate d'amine.

Le liquide organique d'amine 19 est introduit tel quel en totalité dans la chambre de réaction 23, et le liquide organique d'amine 40 qui en résulte est envoyé dans la chambre de réaction 35.

Cette forme de réalisation du procédé selon l'invention présente l'avantage supplémentaire de réaliser une épuration de l'amine en calcuim. On observe en effet que le liquide d'amine 40 recueilli après le traitement avec la suspension d'hydroxyde de calcium dans la chambre de réaction 23 est contaminé par du calcium. Le traitement dans la chambre 35 a pour résultat de transférer le calcium de l'amine dans la solution aqueuse 33.

L'exemple dont la description suit fait apparaître l'intérêt de l'invention.

Dans le procédé qui vient d'être décrit en référence aux figures, l'eau mère (11) avait la composition pondérale suivante :

NaCl : 115 g/kg
NaHCO$_3$ : 49 g/kg

Elle a été soumise à un traitement en trois étapes successives.

Dans un première étape, l'eau mère (11) a été traitée dans le réacteur (14) avec un liquide organique (7) comprenant un mélange de 42 % en poids d'amine PRIMENE 81R® (Rohm & Haas) et 58 % en poids de chlorhydrate d'amine, sans solvant (taux de chlorhydrate : 0,58). Le fonctionnement du réacteur (14) a été réglé de manière que les réactifs y séjournent 1 h 15 min à la température de 57,5° C et sous une pression absolue de 0,2 bar.

Après séparation des phases dans le décanteur (17), on a recueilli une solution aqueuse (33) et un liquide organique (19) ayant respectivement les composition pondérales suivantes :

solution aqueuse (33) :
NaCl : 150 g/kg
NaHCO$_3$ : 5 g/kg
Na$_2$CO$_3$ : traces
Amine : 1,4 g/kg
liquide organique (19) :
taux de chlorhydrate : 0,50

Dans une deuxième étape, la solution aqueuse (33) a été traitée, dans la chambre de réaction (35), avec un liquide organique (40) comprenant un mélange de 90 % d'amine PRIMENE 81R® et 10 % en poids de chlorhydrate d'amine (taux de chlorhydrate : 0,10) et contenant 1300 mg de calcium par kg. La présence du calcium tenait au fait que le liquide organique (40) résultait d'un traitement de conversion de chlorhydrate d'amine en amine au moyen d'un lait de chaux dans la chambre de réaction (23).

Dans cette étape du procédé, on a mis en oeuvre des débits pondéraux égaux de la solution aqueuse (33) et du liquide organique (40). Le traitement dans la chambre de réaction (35) a duré 10 minutes, à une température de 45° C.

Après séparation des phases par centrifugation, on a recueilli une phase aqueuse (18) et une phase organique (38) ayant respectivement les compositions suivantes :

phase aqueuse (18) :

Na Cl : 150 g/kg

NaHCO$_3$ : 1,4 g/kg

Na$_2$CO$_3$ : 2,5 g/kg

Amine : 0,6 g/kg

phase organique (38) :

taux de chlorhydrate : 0,10

Ca : 4 mg/kg

On observe que le traitement de la solution aqueuse (33) avec le liquide organique d'amine (40) a permis de réduire notablement sa teneur en bicarbonate et en amine dissous; le traitement a eu pour résultat complémentaire une épuration de la phase organique en calcium.

Dans une troisième étape, la phase aqueuse (18) a été traitée avec une solution aqueuse normale d'hydroxyde de sodium (30), à raison de 0,8 g d'hydroxyde de sodium par kg de phase aqueuse. La phase aqueuse (39) recueillie à l'issue du traitement avait la composition suivante :

NaCl : 150 g/kg

Na$_2$CO$_3$ : 4 g/kg

Amine : < 0,08 g/kg

**Revendications**

1. Procédé pour la préparation d'une solution aqueuse de chlorure de sodium, à partir d'une solution aqueuse contenant du bicarbonate de sodium dissous, caractérisé en ce qu'on traite la solution de bicarbonate de sodium (33) avec un liquide organique (40) non miscible avec la solution de bicarbonate de sodium et comprenant une base organique azotée insoluble dans l'eau qui présente un caractère basique suffisant pour réagir avec le chlorure d'hydrogène en formant du chlorhydrate de la base organique azotée, et on ajoute du sel gemme (20) à la phase aqueuse résultante (18, 39), le liquide organique comprenant éventuellement du chlorhydrate de la base organique azotée, en une quantité pondérale n'excédant pas 25% du poids global de la base organique azotée et du chlorhydrate de la base organique azotée.

2. Procédé selon la revendication 1, caractérisé en ce qu'on sélectionne la base organique azotée (40) parmi les amines insolubles dans l'eau.

3. Procédé selon la revendication 2, caractérisé en ce qu'on sélectionne la base organique azotée (40) parmi les alkylamines primaires comprenant de 12 à 14 atomes de carbone dans leur molécule.

4. Procédé selon l'une quelconque des revendications 1 à 3, caractérisé en ce qu'on met en oeuvre une solution aqueuse diluée de bicarbonate de sodium (33), obtenue par traitement d'une solution aqueuse saturée de bicarbonate de sodium (11) avec un chlorhydrate de la base organique azotée (7, 12).

5. Procédé selon la revendication 4, caractérisé en ce qu'on met en oeuvre une solution diluée de bicarbonate de sodium (33), contenant de 0,5 à 0,8% en poids de bicarbonate de sodium et une quantité réglée du liquide organique précité (40), pour que la teneur en bicarbonate de sodium de la phase aqueuse (18) soit comprise entre 0,2 et 0,4% en poids.

6. Procédé selon la revendication 4 ou 5, caractérisé en ce qu'on met en oeuvre une base organique azotée (40) dont le chlorhydrate est soluble dans l'eau et en ce qu'avant d'ajouter le sel gemme (20) à la phase aqueuse (39), on la traite avec un agent basique (30) capable de décomposer le chlorhydrate.

7. Procédé selon la revendication 6, caractérisé en ce qu'on sélectionne l'agent basique (30) parmi les oxydes et les hydroxydes des métaux alcalins.

8. Procédé pour la production de bicarbonate de sodium selon lequel on traite une solution aqueuse de chlorure de sodium (2) avec de l'anhydride carbonique (4) et un liquide organique de base organique azotée (3) insoluble dans l'eau, ledit liquide organique étant non miscible avec la solution de bicarbonate de sodium, on recueille, du milieu réactionnel résultant (1), du bicarbonate de sodium solide (10), une eau mère (33) et du chlorhydrate (7) de la base organique azotée, et on décompose le chlorhydrate (7) pour reconstituer la base organique azotée (3, 40) caractérisé en ce qu'on mélange l'eau mère (33) avec la base organique azotée reconstituée (40), on recueille une phase aqueuse (18, 39) et une phase organique (38) qui décantent du mélange résultant (36), on recycle la phase organique (38) dans le milieu réactionnel, et on ajoute du sel gemme (20) à la phase aqueuse (39) que l'on recycle dans le milieu réactionnel (1).

9. Procédé selon la revendication 8, caractérisé en ce que, pour décomposer le chlorhydrate (7), on le traite successivement avec l'eau mère (33) et avec un composé basique de métal alcalino-terreux (24).

10. Procédé selon la revendication 8 ou 9, caractérisé en ce qu'on épure la phase aqueuse en métal alcalino-terreux, avant de la recycler dans le milieu réactionnel.

**Claims**

1. Process for the preparation of an aqueous solution of sodium chloride, from an aqueous solution containing dissolved sodium bicarbonate, characterized in that the sodium bicarbonate solution (33) is treated with an organic liquid (40) immiscible with the sodium bicarbonate solution and containing a water-insoluble nitrogenous organic base which is sufficiently basic in nature to react with hydrogen chloride, forming the hydrochloride of the nitrogenous organic base, and rock salt (20) is added to the resulting aqueous phase (18, 39) the organic liquid optionally containing the hydrochloride of the nitrogenous organic base in an amount by weight not exceeding 25 % of the total weight of the nitrogenous organic base and the hydrochloride of the nitrogenous organic base.

2. Process according to Claim 1, characterized in that the nitrogenous organic base (40) is chosen from water-insoluble amines.

3. Process according to Claim 2, characterized in that the nitrogenous organic base (40) is chosen from primary alkylamines containing from 12 to 14 carbon atoms in their molecule.

4. Process according to any one of Claims 1 to 3, characterized in that a dilute aqueous solution of sodium bicarbonate (33), obtained by the treatment of a saturated aqueous solution of sodium bicarbonate (11) with a hydrochloride of the nitrogenous organic base (7, 12) is employed.

5. Process according to Claim 4, characterized in that a dilute solution of sodium bicarbonate (33), containing from 0.5 to 0.8 % by weight of sodium bicarbonate and an adjusted quantity of the organic liquid mentioned above (40), so that the sodium bicarbonate content of the aqueous phase (18) is between 0.2 and 0.4 % by weight is employed.

6. Process according to Claim 4 or 5, characterized in that a nitrogenous organic base (40) the hydrochloride of which is soluble in water is employed and in that before adding the rock salt (20) to the aqueous phase (39), the latter is treated with a base (30) capable of decomposing the hydrochloride.

7. Process according to Claim 6, characterized in that the base (30) is chosen from oxides and hydroxides of alkali metals.

8. Process for the production of sodium bicarbonate according to which an aqueous solution of sodium chloride (2) is treated with carbon dioxide (4) and an organic liquid of water-insoluble nitrogenous organic base (3), the said organic liquid being immiscible with the sodium bicarbonate solution, solid sodium bicarbonate (10), a mother liquor (33) and the hydrochloride (7) of the nitrogenous organic base are collected from the resulting reaction mixture (1) and the hydrochloride (7) is decomposed in order to reconstitute the nitrogenous organic base (3, 40), characterized in that the mother liquor (33) is mixed with the reconstituted nitrogenous organic base (40), an aqueous phase (18, 39) and an organic phase (38) which separate from the resulting mixture (36) are collected, the organic phase (38) is recycled into the reaction mixture, and rock salt (20) is added to the aqueous phase (39) which is recycled into the reaction mixture (1).

9. Process according to Claim 8, characterized in that, in order to decompose the hydrochloride (7), it is treated with the mother liquor (33) and with a basic compound of an alkaline-earth metal (24) successively.

10. Process according to Claim 8 or 9, characterized in that the aqueous phase is treated to remove the alkaline-earth metal before recycling it into the reaction mixture.

**Ansprüche**

1. Verfahren zur Herstellung einer Wässrigen Natriumchloridlösung aus einer wässrigen, gelöstes Natriumbicarbonat enthaltenden Lösung, dadurch gekennzeichnet, daß man die Natriumbicarbonatlösung (33) mit einer organischen Flüssigkeit (40) behandelt, die mit der Natriumbicarbonatlösung nicht mischbar ist und eine organische, stickstoffhaltige, wasserunlösliche Base enthält, die ausreichende basische Eigenschaften aufweist, um mit dem Chlorwasserstoff durch Bildung von Chlorhydrat der organischen, stickstoffhaltigen Base zu reagieren, und man Steinsalz (20) zu der sich ergebenden wässrigen Phase (18, 39) zufügt, wobei die organische Flüssigkeit gegebenenfalls Chlorhydrat der organischen, stickstoffhaltigen Base umfaßt, in einem Gewichtsanteil, der 25% des Gesamtgewichts der organischen, stickstoffhaltigen Base und des Chlorhydrats der organischen, stickstoffhaltigen Base nicht übersteigt.

2. Verfahren nach Anspruch 1, dadurch gekennzeichnet, daß man die organische, stickstoffhaltige Base (40) unter den wasserunlöslichen Aminen auswählt.

3. Verfahren nach Anspruch 2, dadurch gekennzeichnet, daß man die organische, stickstoffhaltige Base (40) unter den primären Alkylaminen, die 12 bis 14 kohlenstoffatome in ihrem Molekül enthalten, auswählt.

4. Verfahren nach einem der Ansprüche 1 bis 3, dadurch gekennzeichnet, daß man eine verdünnte wässrige Natriumbicarbonatlösung (33) einsetzt, die durch Behandlung einer gesättigten wässrigen Natriumbicarbonatlösung (11) mit einem Chlorhydrat der organischen, stickstoffhaltigen Base (7, 12) erhalten wird.

5. Verfahren nach Anspruch 4, dadurch gekennzeichnet, daß man eine verdünnte Natriumbicarbonatlösung (33) einsetzt, die 0,5 bis 0,8 Gew.-% Natriumbicarbonat und eine bestimmte Menge der obengenannten organischen Flüssigkeit (40) enthält, damit der Gehalt an Natriumbicarbonat der wässrigen Phase (18) zwischen 0,2 und 0,4 Gew.-% liegt.

6. Verfahren nach Anspruch 4 oder 5, dadurch gekennzeichnet, daß man eine organische, stickstoffhaltige Base (40), deren Chlorhydrat wasserlöslich ist, einsetzt und, daß sie vor dem Zufügen des Steinsalzes (20) zu der wässrigen Phase (39) mit einem basischen Mittel (30), das das Chlorhydrat zersetzen kann, behandelt wird.

7. Verfahren nach Anspruch 6, dadurch gekennzeichnet, daß man das basische Mittel (30) auswählt unter den Alkalimetalloxyden und -hydroxyden.

8. Verfahren zur Herstellung von Natriumbicarbonat gemäß dem man eine wässrige Natriumchloridlösung (2) mit Kohlensäureanhydrid (4) und einer organische Flüssigkeit der organischen, stickstoffhaltigen Base (3), die wasserunlöslich ist, behandelt, wobei die organische Flüssigkeit mit der Natriumbicarbonatlösung nicht mischbar ist, aus dem sich ergebenden Reaktionsmilieu (1) festes Natriumbicarbonat (10), Mutterlauge (33) und Chlorhydrat (7) der organischen, stickstoffhaltigen Base auffängt, und das Chlorhydrat (7) zersetzt, um die organische, stickstoffhaltige Base (3, 10) wiederherzustellen, dadurch gekennzeichnet, daß man die Mutterlauge (33) mit der wiederhergestellten organischen, stickstoffhaltigen Base (40) mischt, eine wässrige Phase (18, 39) und eine organische Phase (38), die aus der sich ergebenden Mischung (36) dekantieren, auffängt, die organische Phase (38) in das Reaktionsmilieu zurückführt und Steinsalz (20) zu der wässrigen Phase (39), die man in das Rektionsmilieu (1) zurückführt, zufügt.

9. Verfahren nach Anspruch 8, dadurch gekennzeichnet, daß man um das Chlorhydrat (7) zu zersetzen, es nacheinander mit der Mutterlauge (33) und mit einer basischen Erdalkalimetallverbindung (24) behandelt.

10. Verfahren nach Anspruch 8 oder 9, dadurch gekennzeichnet, daß man die wässrige Erdalkalimetall-Phase vor dem Rückführen in das Reaktionsmilieu reinigt.

Fig. 1

Fig. 2